## Europäisches Patentamt

## European Patent Office

## Office européen des brevets

(11) Veröffentlichungsnummer: **0 259 568 B1**

(12) **EUROPÄISCHE PATENTSCHRIFT**

(45) Veröffentlichungstag der Patentschrift:
**22.08.90**

(21) Anmeldenummer: **87110050.9**

(22) Anmeldetag: **11.07.87**

(51) Int. Cl.⁵: **B60J 5/06,** E05D 15/10, B61D 19/02

(54) Schwenkschiebetür für Fahrzeuge.

(30) Priorität: **05.09.86 DE 3630229**

(43) Veröffentlichungstag der Anmeldung:
**16.03.88 Patentblatt 88/11**

(45) Bekanntmachung des Hinweises auf die Patenterteilung:
**22.08.90 Patentblatt 90/34**

(84) Benannte Vertragsstaaten:
**AT BE FR GB NL**

(56) Entgegenhaltungen:
**BE-A- 707 411**
**DE-B- 1 260 345**

(73) Patentinhaber: **KIEKERT GMBH & CO KG, Kettwiger Strasse 12-24, D-5628 Heiligenhaus(DE)**

(72) Erfinder: **Goldbach, Horst, Dipl.-Ing., Heimgart 18, D-4030 Ratingen 6 (Hösel)(DE)**
Erfinder: **Brandenburg, Rudolf, Spindecksfeld 81, D-4030 Ratingen 6 (Hösel)(DE)**
Erfinder: **Witzke, Paul, Ehrenaue 28, D-4300 Essen 1(DE)**

(74) Vertreter: **Andrejewski, Walter et al, Patentanwälte Dipl.-Phys. Dr. Walter Andrejewski Dipl.-Ing. Dr.-Ing. Manfred Honke Dipl.-Phys. Dr. Karl Gerhard Masch Theaterplatz 3, Postfach 10 02 54, D-4300 Essen 1(DE)**

## Beschreibung

Die Erfindung bezieht sich gattungsgemäß auf eine Schwenkschiebetür für Fahrzeuge, insbesondere Personenbeförderungswagen, - mit zwei im geschlossenen Zustand in der Fahrzeugwand, im geöffneten Zustand außen vor der Fahrzeugwand angeordneten Türblättern, die an Führungsschienen sowie in einer Teleskopführung geführt und mit Hilfe einer Antriebseinrichtung zu betätigen sind, wobei die Antriebseinrichtung Schwenkhebel aufweist, welche die Türblätter aus der geschlossenen Stellung in eine öffnungsbereite Stellung und zurück schwenken sowie mit einem Verschiebeaggregat versehen sind, mit dem die ausgeschwenkten Türblätter in Öffnungrichtung sowie in Schließstellung verschiebbar sind, wobei fernerhin die Antriebseinrichtung eine Zylinderkolbenanordnung für die Verschiebebewegung aufweist, die einerseits an den Türblättern angreift und andererseits die Schwenkhebel betätigt. - Die Zylinderkolbenanordnung kann aus zwei Zylinderkolbenaggregaten mit jeweils einem Zylinder und einem Kolben oder aber auch einem einzigen Zylinderkolbenaggregat mit nur einem Zylinder und einem Kolben bestehen.

Bei der bekannten gattungsgemäßen Schwenkschiebetür ist die Zylinderkolbenanordnung mit dem freien Ende eines Zylinders an einem festen Punkt der Fahrzeugkarosserie abgestützt. Das läßt nicht ohne weiteres eine Verriegelung der Türblätter in geschlossener Stellung zu. Dazu sind vielmehr besondere Verriegelungseinrichtungen vorgesehen.

Der Erfindung liegt die Aufgabe zugrunde, eine gattungsgemäße Schwenkschiebetür so weiter auszubilden, daß die Antriebseinrichtung die Türblätter in geschlossener Stellung ohne weiteres auch verriegelt.

Zur Lösung dieser Aufgabe lehrt die Erfindung, daß eine Zylinderkolbenanordnung mit dem freien Ende eines Zylinders an einem Hebelgetriebe angreift, welches aus einem um eine fahrzeugfeste vertikale Achse schwenkbaren, im Winkelzentrum gelagerten Winkelhebel und dem Schwenkhebel besteht, daß der zur Fahrzeuginnenseite weisende Winkelhebelarm an die Zylinderkolbenanordnung angeschlossen ist und der zur Fahrzeugaußenseite weisende Winkelhebelarm einen Steuerzapfen aufweist, daß der Schwenkhebel an einer vertikalen Welle gelagert ist und einen mit der Führungsschiene am zugeordneten Türblatt verbundenen Schwenkhebelarm sowie einen zur Fahrzeuginnenseite weisenden Steuerhebelarm aufweist, der mit einer Steuerkurvenausnehmung versehen ist, in die der Steuerzapfen einfaßt, und daß die Steuerkurvenausnehmung eine zur Türöffnung hin konvex bogenförmige Form mit im geschlossenen Zustand der Türblätter wirksamen Verriegelungsbogenstück besitzt. Wie bereits erwähnt, kann die Zylinderkolbenanordnung zwei Zylinderkolbenaggregate aus jeweils einem Zylinder und einem Kolben aufweisen. Dann ist die beschriebene Einrichtung gleichsam zweimal, für jedes Türblatt mit einem besonderen Zylinderkolbenaggregat, verwirklicht. Es besteht aber auch die Möglichkeit, die Anordnung so zu treffen, daß die Zylinderkolbenanordnung nur ein einziges, bei der Schwenkbewegung und der Öffnungsschiebebewegung der Türblätter ausfahrendes Zylinderkolbenaggregat aufweist, das mit seiner Kolbenstange an das dem Hebelgetriebe gegenüberliegende Türblatt angeschlossen ist sowie über den Seilzug an dem anderen Türblatt angreift, und daß das mit der Kolbenstange verbundene Türblatt ein dem beschriebenen Hebelgetriebe entsprechendes Komplementärhebelgetriebe mit Schwenkhebel und Betätigungshebel aufweist, welches mit einem zum Fahrzeuginnenraum weisenden Betätigungshebelarm über eine Kupplungsstange im Bereich des Steuerzapfens an das Hebelgetriebe angeschlossen ist. Es empfiehlt sich in diesem Falle, in dem Seilzug eine Feder anzuordnen.

Im allgemeinen wird man bei der erfindungsgemäßen Schwenkschiebetür die Zylinderkolbenanordnung und das Hebelgetriebe bzw. das Komplementärhebelgetriebe und die Kupplungsstange sowie den Seilzug oberhalb der Türblätter anordnen und die vertikale Welle im unteren Bereich des Türblattes an der Karosserie lagern sowie mit einem weiteren Schwenkhebel versehen, der an eine untere Führungsschiene der Türblätter angeschlossen ist.

Im folgenden wird die Erfindung anhand einer lediglich ein Ausführungsbeispiel darstellenden Zeichnung ausführlicher erläutert. Es zeigen in schematischer Darstellung

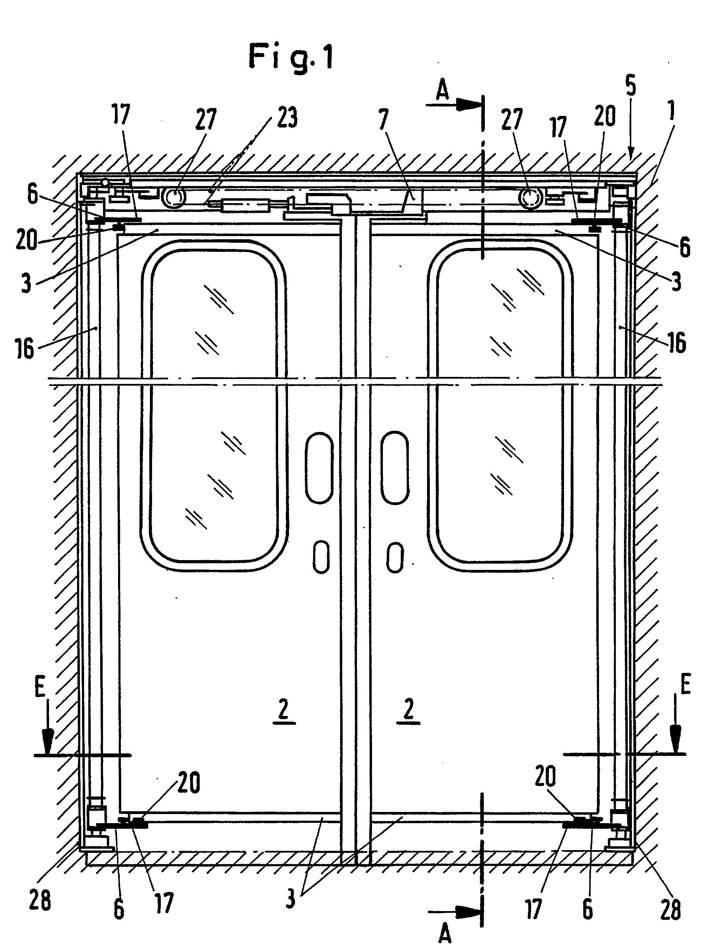

Fig. 1 eine Ansicht einer erfindungsgemäßen Schwenkschiebetür, Mittelteil entfernt,

Fig. 2a einen Schnitt in Richtung A-A durch den Gegenstand nach Fig. 1,

Fig. 2b den vergrößerten Ausschnitt B aus dem Gegenstand der Fig. 2a,

Fig. 3a eine Ansicht des Gegenstandes der Fig. 1 von oben im geschlossenen Zustand der Türblätter,

Fig. 3b den vergrößerten Ausschnitt C aus dem Gegenstand der fig. 3a,

Fig. 4a den Gegenstand nach Fig. 3a in anderer Funktionsstellung, einige Bauteile entfernt,

Fig. 4b den vergrößerten Ausschnitt D aus dem Gegenstand der Fig. 4a, und

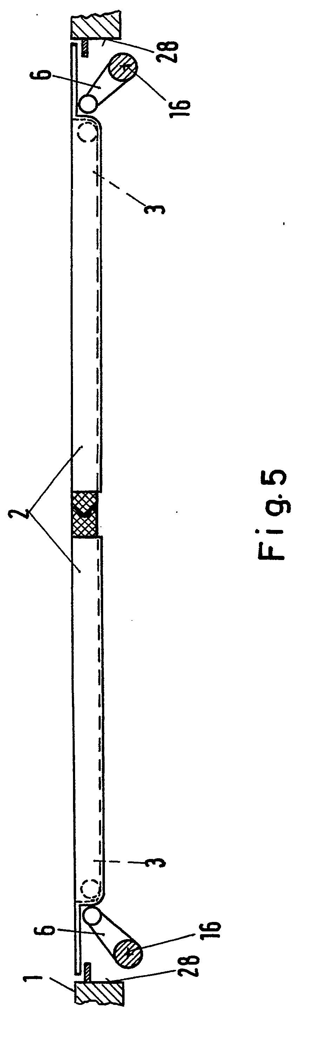

Fig. 5 einen Schnitt in Richtung E-E durch den Gegenstand nach Fig. 1.

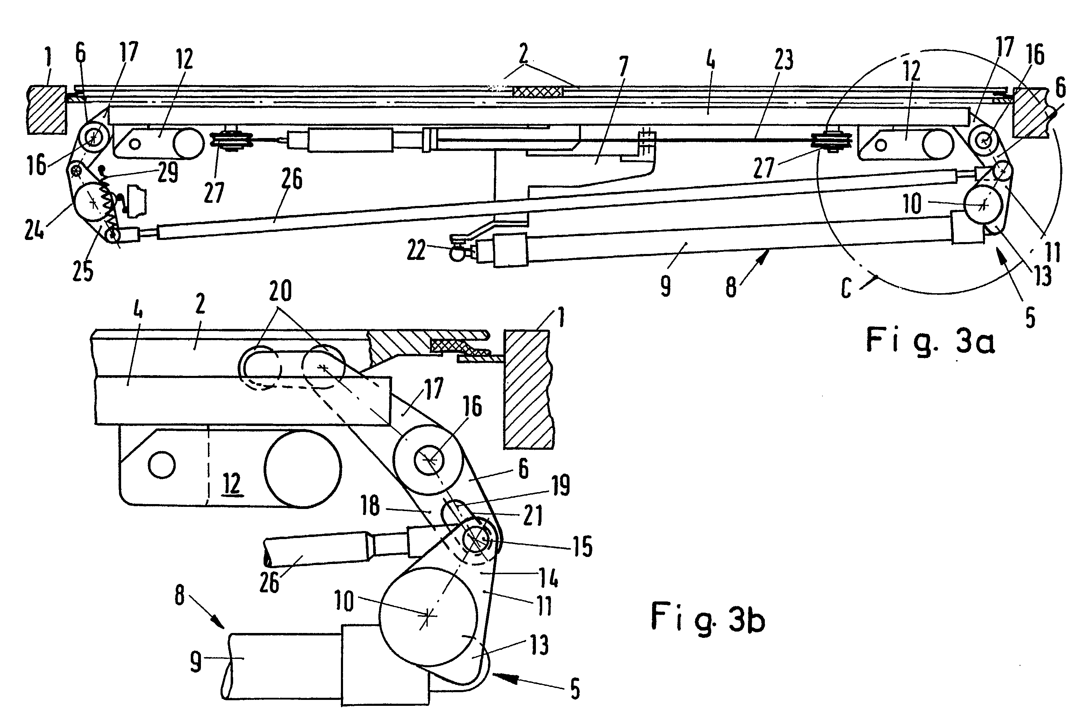

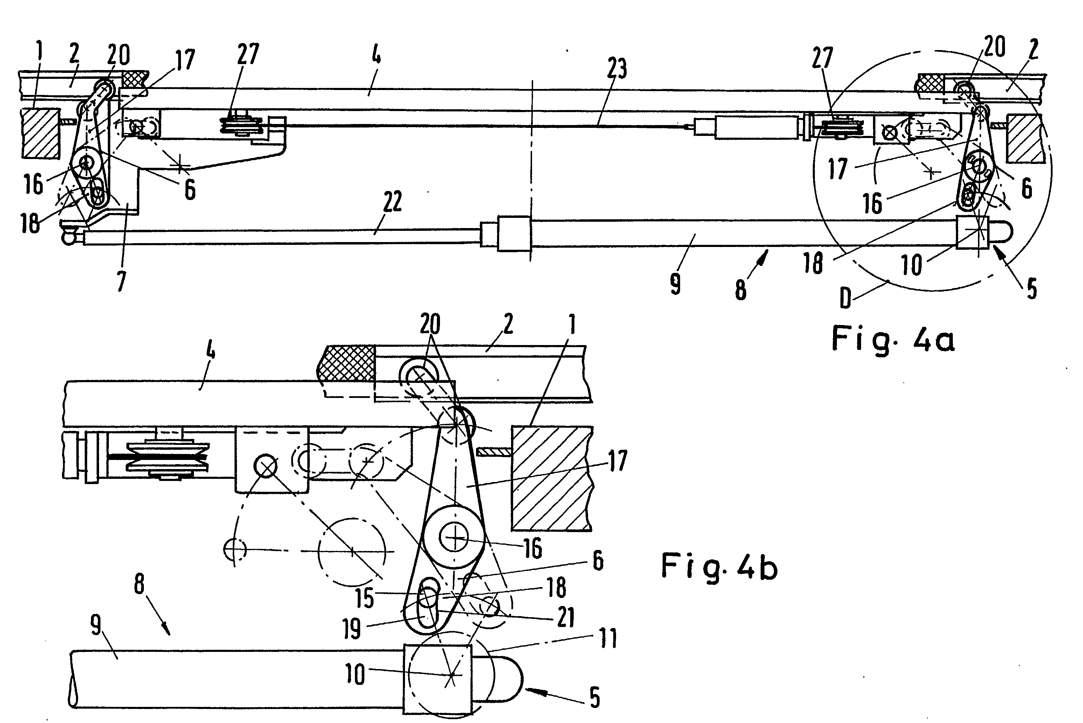

Die in den Figuren dargestellte Schwenkschiebetür ist für Fahrzeuge, insbesondere für Personenbeförderungswagen, bestimmt. Sie besitzt zwei im geschlossenen Zustand in der Fahrzeugwand 1, im geöffneten Zustand außen vor der Fahrzeugwand 1 angeordnete Türblätter 2. Dazu wird auf eine vergleichende Betrachtung der Fig. 3a und 4a verwiesen. Die Türblätter 2 sind an Führungsschienen 3 sowie in einer Teleskopführung 4 geführt und mit Hilfe einer Antriebseinrichtung 5 zu betätigen. Die Antriebseinrichtung 5 weist Schwenkhebel 6 auf, welche die Türblätter 2 aus der geschlossenen Stellung in eine öffnungsbereite Stellung und zurück schwenken. Die Antriebseinrichtung 5 ist fernerhin mit einem Verschiebeaggregat 7 versehen, mit dem die aufgeschwenkten Türblätter 2 in Öffnungsrichtung sowie in Schließrichtung verschiebbar sind. Die Antriebseinrichtung 5 weist eine Zylinderkolbenanordnung 8 für die Verschiebebewegung auf, die einerseits an den Türblättern 2 angreift und andererseits die Schwenkhebel 6 betätigt.

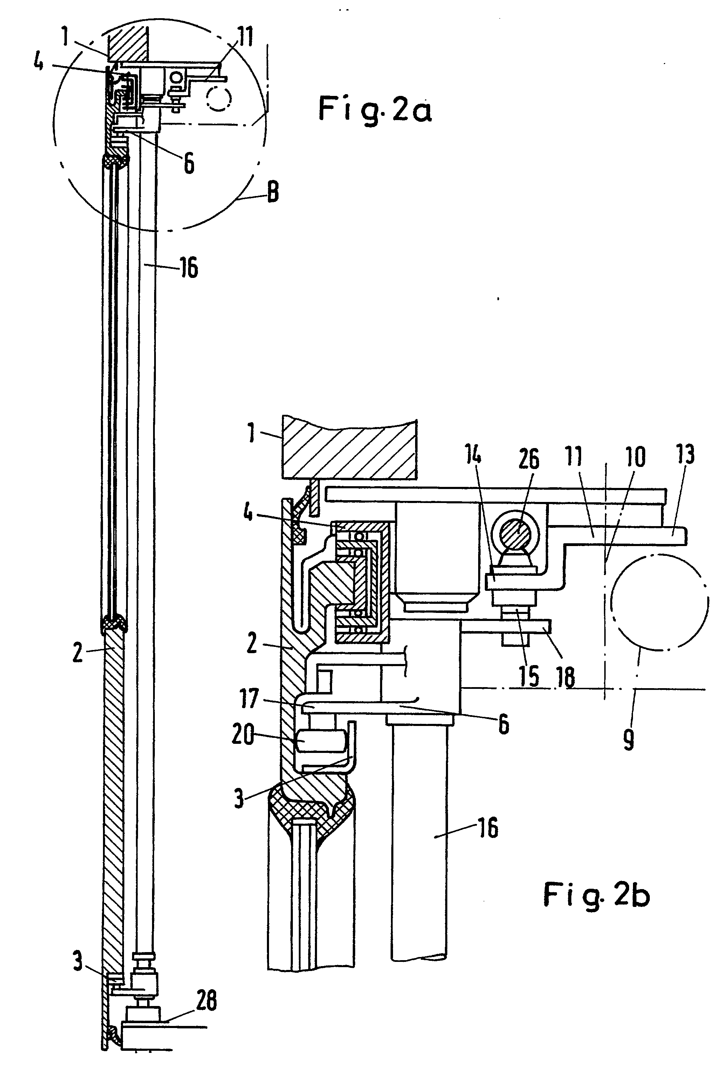

Aus einer vergleichenden Betrachtung der Fig. 2b, 3b und 4b, insbesondere aus der Fig. 4b, entnimmt man, daß die Zylinderkolbenanordnung 8 mit dem freien Ende eines Zylinders 9 an einem Hebelgetriebe angreift, welches aus einem um eine fahrzeugfeste vertikale Achse 10 schwenkbaren, im Winkelzentrum gelagerten Winkelhebel 11 und dem Schwenkhebel 6 besteht. In der Fig. 3b sind einige Bauteile verdeckt. Man erkennt dafür Bauteile 12, mit denen das Türblatt 2 der Fig. 3b an die Teleskopführung 4 angeschlossen ist. In der Fig. 4b erkennt man strichpunktiert die Stellung des Hebelgetriebes in geschlossener Stellung der Türblätter 2. Der zur Fahrzeuginnenseite weisende Winkelhebelarm 13 ist an die Zylinderkolbenanordnung 8 angeschlossen. Der zur Fahrzeugaußenseite weisende Winkelhebelarm 14 weist einen Steuerzapfen 15 auf. Der Schwenkhebel 6 ist an einer vertikalen Welle 16 gelagert, zu der insbesondere auf Fig. 2a verwiesen wird. Der Schwenkhebel 6 besitzt einen mit der Führungsschiene 3 am zugeordneten Türblatt 2 verbundenen Schwenkhebelarm 17 sowie einen zur Fahrzeuginnenseite weisenden Steuerhebelarm 18, der mit einer Steuerkurvenausnehmung 19 versehen ist. Man erkennt, daß im Ausführungsbeispiel der Schwenkhebelarm 17 Rollen 20 aufweist, die mit der Führungsschiene 3 wechselwirken. In die Steuerkurvenausnehmung 19 faßt der schon erwähnte Steuerzapfen 15 ein. Die Steuerkurvenausnehmung 19 besitzt, wie die Fig. 4b erkennen läßt, eine zur Türöffnung hin konvex bogenförmige Form mit im geschlossenen Zustand der Türblätter 2 wirksamem Verriegelungsbogenstück 21. Diese Verriegelungsstellung ist in der Fig. 4b strichpunktiert angedeutet. Vergegenwärtigt man sich die Kräfte, die entstehen, wenn jemand in geschlossener Stellung der Türblätter 2 versuchen wollte, die Türblätter 2 nach außen aufzudrücken, so erkennt man unmittelbar, daß sich das Hebelgetriebe nicht verstellen kann, also blockiert ist und dadurch die Verriegelung bewirkt. Anders liegen die Verhältnisse, wenn die Zylinderkolbenanordnung 8 öffnend betätigt wird. Dann wirkt auf das Hebelgetriebe ein Moment, welches die Blockierung aufhebt. Im Ausführungsbeispiel und nach bevorzugter Ausführungsform der Erfindung besitzt die Zylinderkolbenanordnung 8 nur ein einziges Zylinderkolbenaggregat, welches mit seiner Kolbenstange 22 an das dem Hebelgetriebe gegenüberliegende Türblatt 2 angeschlossen sowie über einen Seilzug 23 mit dem anderen Türblatt 2 verbunden ist. Der Zylinder 9 dieses Zylinderkolbenaggregates greift an dem Hebelgetriebe an. Das mit der Kolbenstange 22 verbundene Türblatt 2 besitzt ein Hebelgetriebe entsprechendes Komplementärgetriebe mit Schwenkhebel 6 und Betätigungshebel 24, welches mit einem zum Fahrzeuginnenraum weisenden Betätigungshebelarm 25 über eine Kupplungsstange 26 im Bereich des Steuerzapfens 15 an das Hebelgetriebe angeschlossen ist. Das Zylinderkolbenaggregat 8 fährt bei der Schwenkbewegung und der Öffnungsschiebebewegung der Türblätter 2 aus. In dem Seilzug 23 ist eine nicht gezeichnete Feder angeordnet. Er ist über Umlenkrollen 27 geführt. Die Zylinderkolbenanordnung 8 und das Hebelgetriebe bzw. das Komplementärhebelgetriebe und die Kupplungsstange 26 befinden sich oberhalb der Türblätter 2. Die vertikale Welle 16 ist im unteren Bereich der Türblätter 2 an der Karosserie 28 gelagert sowie mit einem weiteren Schwenkhebel 6 versehen, der an eine untere Führungsschiene 3 der Tür angeschlossen und dazu mit einer Rolle 20 versehen ist. Die Teleskopführung 4 ist z. B. in der DE-A 20 20 576 beschrieben.

In Fig. 3a erkennt man auf der linken Gestängeseite eine Schließfeder 29, die einerseits an dem Betätigungshebelarm 25 im Bereich der Anlenkung der Kupplungsstange 26, andererseits an einen Festpunkt angeschlossen ist. Diese Schließfeder 29 wirkt beim Schließvorgang auf der der Zylinderkolbenanordnung 8 abgewandten Seite unterstützend und macht darüber hinaus das Hand-Schließen möglich. Die Schließfeder 29 ist so angeordnet, daß ihre Wirkung bei offener Tür gegen Null geht (Totpunktlage), beim Schließen dagegen der wirksame Hebel des Betätigungshebelarmes 25 immer größer wird, so daß im Augenblick des Anliegens von Gummiprofilen an den Türblättern 2 (wenn Maximalkraft gebraucht wird) diese Maximalkraft gerade zur Verfügung steht.

Nach einer abgewandelten Ausführungsform der Erfindung ist vorgesehen, daß die Zylinderkolbenanordnung 8 durch einen Elektroantrieb ersetzt wird, dessen Reaktionskraft wie bei der Zylinderkolbenanordnung 8 an dem der Kolbenstange 22 angewandten Ende für die Schließbewegung der Tür abgenommen wird. Bei diesem Elektroantrieb kann es sich beispielsweise um einen Elektromotor mit einer Hohlwelle handeln, durch die eine Spindel geführt ist. Ein solcher Elektroantrieb könnte als Block auf einer Kulisse gelagert werden.

Endlich ist eine nicht dargestellte Notbetätigung auf der linken Türseite vorgesehen. Diese Notbetätigung wird durch das nächste Schließen der Tür (automatisch oder von Hand) wieder zurückgestellt. Dazu ist bei der erfindungsgemäßen Konstruktion nicht länger eine sonst übliche Zusatzvorrichtung erforderlich.

## Patentansprüche

1. Schwenkschiebetür für Fahrzeuge, insbesondere für Personenbeförderungswagen, - mit zwei im geschlossenen Zustand in der Fahrzeugwand (1), im geöffneten Zustand außen vor der Fahrzeugwand (1) angeordneten Türblättern (2), die an Führungsschienen sowie in einer Teleskopführung (4) geführt und mit Hilfe einer Antriebseinrichtung (5) zu betätigen sind, wobei die Antriebseinrichtung (5) Schwenkhebel (6) aufweist, welche die Türblätter (2) aus der geschlossenen Stellung in eine öffnungsbereite Stellung und zurück schwenken sowie mit einem Verschiebeaggregat (7) versehen sind, mit dem die ausgeschwenkten Türblätter in Öffnungsrichtung sowie in Schließrichtung verschiebbar sind, wobei fernerhin die Antriebseinrichtung (5) eine Zylinderkolbenanordnung (8) für die Verschiebebewegung aufweist, die einerseits an den Türblättern (2) angreift und andererseits die Schwenkhebel (6) betätigt, **dadurch gekennzeichnet**, daß die Zylinderkolbenanordnung (8) mit dem freien Ende eines Zylinders (9) an einem Hebelgetriebe angreift, welches aus einem um eine fahrzeugfeste vertikale Achse (10) schwenkbaren, im Winkelzentrum gelagerten Winkelhebel (11) und dem Schwenkhebel (6) besteht,

daß der zur Fahrzeuginnenseite weisende Winkelhebelarm (13) an die Zylinderkolbenanordnung (8) angeschlossen ist und der zur Fahrzeugaußenseite weisende Winkelhebelarm (14) einen Steuerzapfen (15) aufweist, daß der Schwenkhebel (6) an einer vertikalen Welle (16) gelagert ist und einen mit der Führungsschiene (3) am zugeordneten Türblatt (22) verbundenen Schwenkhebelarm (17) sowie einen zur Fahrzeuginnenseite weisenden Steuerhebelarm (18) aufweist, der mit einer Steuerkurvenausnehmung (19) versehen ist, in die der Steuerzapfen (15) einfaßt, und daß die Steuerkurvenausnehmung (19) eine zur Türöffnung hin konvex bogenförmige Form mit im geschlossenen Zustand der Türblätter (2) wirksamem Verriegelungsbogenstück (21) besitzt.

2. Schwenkschiebetür nach Anspruch 1, dadurch gekennzeichnet, daß die Zylinderkolbenanordnung (8) nur ein einziges, bei der Schwenkbewegung und der Öffnungsschiebebewegung der Türblätter (27) ausfahrendes Zylinderkolbenaggregat aufweist, das mit seiner Kolbenstange (22) an das dem Hebelgetriebe gegenüberliegende Türblatt (2) angeschlossen ist sowie über einen Seilzug (23) an dem anderen Türblatt (2) angreift, und daß das mit der Kolbenstange (22) verbundene Türblatt (2) ein dem beschriebenen Hebelgetriebe entsprechendes Komplementärhebelgetriebe mit Schwenkhebel (6) und Betätigungshebel (24) aufweist, welches mit einem zum Fahrzeuginnenraum weisenden Betätigungshebelarm (25) über eine Kupplungsstange (26) im Bereich des Steuerzapfens (15) an das Hebelgetriebe angeschlossen ist.

3. Schwenkschiebetür nach Anspruch 2, dadurch gekennzeichnet, daß in dem Seilzug eine Feder angeordnet ist.

4. Schwenkschiebetür nach einem der Ansprüche 1 bis 3, dadurch gekennzeichnet, daß die Zylinderkolbenanordnung (8) und das Hebelgetriebe sowie ggf. das Komplementärhebelgetriebe und die Kupplungsstange (26) oberhalb der Türblätter (2) angeordnet sind und die vertikale Welle (16) im unteren Bereich der Türblätter (2) an der Karosserie (28) gelagert sowie mit einem weiteren Schwenkhebel (6) versehen ist, der an eine untere Führungsschiene (3) der Türblätter (2) angeschlossen ist.

5. Schwenkschiebetür nach einem der Ansprüche 1 bis 4, dadurch gekennzeichnet, daß einerseits an dem Betätigungshebelarm (25) im Bereich der Anlenkung im Bereich der Kupplungsstange (26), andererseits an einem Festpunkt eine Schließfeder (29) angeschlossen ist.

**Claims**

1. A swivel-sliding door for vehicles, and particularly for passenger-carrying vehicles – with two door leaves (2) that in the closed position are located in the vehicle wall (1) and in the opened position are located outside and in front of the vehicle wall (1), are guided along guide rails (3) and in a telescopic guide (4) and are operable by means of a driving equipment (5), in which the driving equipment (5) possesses rocking levers (6) that swing the door leaves (2) out of the closed position into a position ready for opening and back again, and are also provided with a sliding assembly (7), by which the swung-out door leaves are slidably in the opening direction and in the closing direction, in which moreover the driving equipment (5) possesses a piston-cylinder appliance (8) for the sliding movement, that on one hand acts upon the door leaves (2) and on the other hand actuates the rocking levers (6) characterized in that by the free end of a cylinder (9) the piston-cylinder appliance (8) acts upon a lever transmission, that consists of the rocking lever (6) and an angle lever (11), supported at the centre of the angle and pivotable around a vertical spindle (10) that is rigidly fastened to the vehicle, that the angle lever arm (13) that is directed towards the interior of the vehicle is connected to the piston-cylinder appliance (8), and the angle lever arm (14) that is directed towards the exterior of the vehicle possesses a control peg (15), that the rocking lever (6) is supported on a vertical shaft (16) and possesses a rocking lever arm (17) connected to the guide rail (3) on the associated door leaf (2), as well as a rocking lever arm (18) directed towards the interior of the vehicle that is provided with a control curve recess (19) into which the control peg (15) fits, and that the control curve recess (19) has an arched shape, convex towards the door opening, with a locking arch piece (21) that comes into action in the closed state of the door leaves (2).

2. A swivel-sliding door according to Claim 1, characterized in that the piston-cylinder appliance (8) only has a single piston-cylinder assembly extending outwards during the swivelling movement and the sliding-open movement of the door leaves (2), that is attached by its piston rod (22) to the door leaf (2) that is opposite to the lever transmission and also acts upon the other door leaf (2) via a rope traction (23) and that the door-leaf (2) that is connected to the piston-rod (22) possesses a complementary lever transmission corresponding to the aforementioned lever transmission, with rocking lever (6) and actuating lever (24) that is connected by an actuating lever arm (25), directed towards the interior of the vehicle, to the lever transmission via a coupling rod (26) in the neighbourhood of the control peg (15).

3. A swivel-sliding door according to Claim 2, characterized in that a spring is included in the rope traction.

4. A swivel-sliding door according to one of Claims 1 to 3, characterized in that the piston-cylinder appliance and the lever transmission or if appropriate the complementary lever transmission, and the coupling rod (26), are generally situated above the door leaves (2), and the vertical shaft (16) is supported on the coachwork (28) at the lower portion of the door leaves (2) and is also provided with a further rocking lever (6) that is attached to a lower guide rail (3) of the door leaves (2).

5. A swivel-sliding door according to one of Claims 1 to 4, characterized in that a closing spring (29) is attached at one end to the actuating lever arm (25) in the neighbourhood of the articulation of the coupling rod (26) and is attached at the other end to a fixed point.

**Revendications**

1. Portière articulée et coulissante pour véhicules, en particulier pour véhicules destinés au transport de personnes, comprenant deux vantaux de porte (2) disposés à l'état fermé dans la paroi (1) du véhicule et à l'état ouvert, à l'extérieur en avant de la paroi (1) du véhicule, guidés sur des glissières (3) ainsi que dans un guidage télescopique (4) et actionnés à l'aide d'un dispositif d'entraînement (5), ledit dispositif d'entraînement (5) comprenant des leviers pivotants (6) qui amènent les vantaux de porte (2) de la position fermée à une position d'attente pour l'ouverture et inversement, ainsi qu'un groupe de translation (7) permettant de déplacer les vantaux de porte pivotés vers l'extérieur dans la direction d'ouverture ainsi que dans la direction de fermeture, le dispositif d'entraînement (5) comportant, en outre, un système de cylindre-piston (8) pour le mouvement de translation qui, d'une part, est articulé sur les vantaux de porte (2) et, d'autre part, actionne les leviers pivotants (6), caractérisée par le fait que le système de cylindre-piston (8) est articulé avec l'extrémité libre d'un cylindre (9) sur un mécanisme à leviers constitué d'un levier coudé (11) monté au centre du coude et pouvant être pivoté autour d'un axe vertical (10) solidaire du véhicule, et du levier pivotant (6); que le bras de levier coudé (13) dirigé vers l'intérieur du véhicule est rattaché au système de cylindre-piston (8) alors quelle bras de levier coudé (14) dirigé vers l'extérieur du véhicule comporte un tenon de commande (15); que ie levier pivotant (6) est monté sur un arbre vertical (16) et comprend un bras de levier pivotant (17) raccordé à la glissière (3) sur le vantail de porte (2) associé ainsi qu'un bras de levier de commande (18) dirigé vers l'intérieur du véhicule et muni d'un évidement de came de commande (19) dans lequel s'engage le tenon de commande (15); et que l'évidement de came de commande (19) présente une forme en arc à courbure convexe en direction de l'ouverture de porte, avec un segment de verrouillage (21) agissant à l'état fermé des vantaux de porte (2).

2. Portière articulée et coulissante selon la revendication 1, caractérisée par le fait que le système de cylindre-piston (8) ne comprend qu'un seul groupe de cylindre-piston qui sort lors du pivotement et du mouvement de translation d'ouverture des vantaux de porte (2) et dont la tige de piston (22) est rattachée au vantail de porte (2) situé en face du mécanisme à leviers et qui agit sur l'autre vantail de porte (2) par l'intermédiaire d'une commande par câble (23); et que le vantail de porte (2) relié à la tige de piston (22) est équipé d'un mécanisme à leviers complémentaire avec levier pivotant (6) et levier de manœuvre (24) correspondant au mécanisme à leviers décrit, lequel est raccordé avec un bras de levier de manœuvre (25) dirigé vers l'intérieur du véhicule, par l'intermédiaire d'une tige d'accouplement (26), au mécanisme à leviers dans la région du tenon de commande (15).

3. Portière articulée et coulissante selon la revendication 2, caractérisée par le fait que dans la commande par câble est disposé un ressort.

4. Portière articulée et coulissante selon l'une quelconque des revendications 1 à 3, caractérisée par le fait que le système de cylindre-piston (8) et le mécanisme à leviers et respectivement le mécanisme à leviers complémentaire et la tige d'accouplement (26) sont disposés au-dessus des vantaux de porte (2) et que l'arbre vertical (16) est monté dans la région inférieure des vantaux de porte (2) sur la carrosserie (28) et muni d'un levier pivotant (6) supplémentaire lequel est rattaché à une glissière (3) des vantaux de porte (2).

5. Portière articulée et coulissante selon l'une quelconque des revendications 1 à 4, caractérisée par le fait qu'un ressort de fermeture (29) est fixé d'une part sur le bras de levier de manœuvre (25) dans la région de l'articulation de la tige d'accouplement (26) et, d'autre part, en un point fixe.

# Fig.1

Fig. 2a

Fig. 2b

Fig. 3a

Fig. 3b

Fig. 4a

Fig. 4b

Fig. 5

EP 0 259 568 B1